# EUROPÄISCHE PATENTSCHRIFT

(11) **EP 1 561 533 B1**
(45) Veröffentlichungstag und Bekanntmachung des Hinweises auf die Patenterteilung: **03.06.2009**
(21) Anmeldenummer: 05000262.5
(22) Anmeldetag: 07.01.2005
(51) Int. Cl.: B23D 23/00

(54) **Vorrichtung zum Schneiden von Profilen**
Apparatus for cutting profiles
Dispositif pour couper des profils

(30) Priorität: 04.02.2004 DE 202004001666 U
(43) Veröffentlichungstag der Anmeldung: 10.08.2005
(73) Patentinhaber: VIEGA GmbH & Co. KG, 57439 Attendorn (DE)
(72) Erfinder: Viegener, Walter, 57439 Attendorn (DE)
(74) Vertreter: Cohausz & Florack

(56) Entgegenhaltungen:
- DE-A1- 19 926 481
- DE-U1- 9 003 309
- DE-U1- 9 204 329
- GB-A- 191 406 091

## Beschreibung

Die Erfindung betrifft eine Vorrichtung zum Schneiden von Profilen, mit einem Rahmen und zwei relativ zueinander bewegbaren Schneidbacken, von denen mindestens eine bewegbar ist und zwischen denen ein Spalt zum Einfügen eines Profils vorgesehen ist, und mit einem Stempel der zum Stanzen eines Loches in das Profil durch eine Matrize durchführbar ist, wobei die bewegbare Schneidbacke und der Stempel über einen manuell betätigbaren Hebel und einen Exzenter bewegbar sind.

Eine derartige Vorrichtung ist aus der EP 0 033 245 A1 bekannt,

In der DE 199 26 481 A1 ist ein hydraulisches Arbeitsgerät beschrieben, bei dem an einem Hals ein Halterungskopf zur Aufnahme von Werkzeugen vorgesehen ist. Als Werkzeug kann beispielsweise ein Schneidwerkzeug zum Ablängen von Profilen montiert werden, wobei dann über die Hydraulik, die auch manuell über einen Hebel betätigbar ist, die Schneidbacken verfahren werden können. Um statt dem Schneiden eines Profils auch andere Schneid- oder Stanzvorgänge ausführen zu können, kann an dem Halterungskopf jeweils ein unterschiedliches Werkzeug montiert werden. Gerade im Installationsbereich müssen verschiedene Schneid- und Stanzvorgänge ausgeführt werden, wobei das Wechseln der Werkzeuge an dem Halterungskopf aufwendig ist und zudem die richtigen Werkzeuge für die Installation bereit gestellt werden müssen.

Aus dem Dokument DE 92 04 329 U1 ist eine Bearbeitungseinheit zum Schneiden (Ablängen) und Stanzen von Profilschienen bekannt, die einen unteren Werkzeugträger und einen oberen Werkzeugträger aufweist, wobei der untere werkzeugträger ein oder mehrere auswechselbare hunterwerkzeuge trägt, während der obere Werkzeugträger ein oder mehrere auswechselbare, bewegliche Oberwerkzeuge trägt sowie mit einer Antriebseinrichtung in Form eines Exzenter-Hebelantriebes versehen ist. Der obere Werkzeugträger ist dabei mit seiner Unterseite auf den unteren Werkzeugträger aufgesetzt und im Betrieb mit diesem fest verbunden und mittels mindestens einem Schnellspannelement verspannt. Ferner ist diese bekannte Bearbeitungseinheit so ausgebildet, dass mindestens ein Unterwerkzeug von der dem oberen Werkzeugträger zugewandten Oberseite des unteren Werkzeugträgers und mindestens ein Oberwerkzeug von der dem unteren Werkzeugträger zugewandten Unterseite des oberen Werkzeugträgers her auswechselbar ist. Die genaue Funktionsweise dieser Bearbeitungseinheit hinsichtlich des Schneidens oder Stanzens von Profilschienen lässt sich dem Dokument DE 92 04 329 U1 nicht klar entnehmen.

Der vorliegenden Erfindung liegt die Aufgabe zugrunde, eine Vorrichtung der eingangs genannten Art zu schaffen, mit der sich Profile (Profilschienen) auf einfache Weise sauber und gratfrei ablängen sowie Löcher in entsprechende Profile mit geringem Kraftaufwand stanzen lassen. Die Vorrichtung soll zugleich einen einfachen Aufbau besitzen und transportabel sein.

Diese Aufgabe wird erfindungsgemäß mit einer die im Anspruch 1 angegebenen Merkmale aufweisenden Vorrichtung gelöst. Die erfindungsgemäße Vorrichtung ist dadurch gekennzeichnet, dass die bewegbare Schneidbacke in einer Aufnahme aufgenommen ist, die mit dem Exzenter in Verbindung steht, wobei der Stempel an der Aufnahme angelenkt und in einer am Rahmen festgelegten Gleitbuchse geführt ist, und wobei an dem Rahmen Aufnahmen für Profile zur Vergrößerung der bodenseitigen Auflagefläche vorgesehen sind.

Da der Hebel über einen Exzenter die bewegbare Schneidbacke und den Stempel bewegt, lassen sich besonders hohe Kräfte mit dem Hebel übertragen, auch wenn der Verfahrweg des Stempels und der Schneidbacke verringert wird, was jedoch zum Schneiden und Stanzen von Profilen meist keinen Nachteil bedeutet, sondern vielmehr durch die verbesserte Kraftübertragung die Arbeit erleichtert. Um für das Ablängen von Profilen und das Stanzen von Löchern in entsprechende Profile nur geringe Kräfte aufwenden zu müssen, kann der Hebel besonders lang ausgebildet sein. Diesbezüglich und hinsichtlich eines einfachen Transports der Vorrichtung ist es vorteilhaft, dass an dem Rahmen Aufnahmen für Profile zur Vergrößerung der bodenseitigen Auflagefläche vorgesehen sind. Denn gerade bei einem großen Hebel können erhebliche Kräfte auf den Rahmen beim Scheiden der Profile übertragen werden, sodass die bodenseitige Abstützung bei Bedarf über in die Aufnahmen eingeführte Profile, insbesondere Rohre verbessert werden kann.

Gemäß einer bevorzugten Ausführungsform der Erfindung sind die Matrize und eine Schneidbacke an einem Rahmen festgelegt. Dadurch besitzt die Vorrichtung einen Rahmen, und relativ hierzu eine bewegbare Schneidbacke und einen Stempel, die dann für einen einfachen Aufbau gemeinsam gelagert sind.

Die erfindungsgemäße Vorrichtung eignet sich besonders gut zum Schneiden von sogenannten offenen Profilen, die an einer Seite einen längs des Profils verlaufenden Schlitz besitzen, sodass ein Kern in das Profil einführbar ist, wobei der zwischen den Schneidbacken ausgebildete Spalt im Wesentlichen C-förmig ist. Der Kern kann dann für eine Abstützung des Profils im Bereich der Schneidbacken sorgen.

Um die Vorrichtung leicht transportieren zu können, ist der Hebel vorzugsweise zerlegbar oder einziebar, sodass er für eine Betätigung besonders lang ausgebildet sein kann, um nur geringe Kräfte aufwenden zu müssen, aber für den Transport demontiert werden kann.

Um das Profil auch im Bereich des Stempels und der Matrize zu führen, ist vorzugsweise eine Profilaufnahme vorgesehen, um das Profil exakt zwischen Stempel und Matrize zu positionieren und entsprechende Öffnungen auszustanzen.

Die Erfindung wird nachfolgend anhand eines Ausführungsbeispieles mit Bezug auf die beigefügten Zeichnungen näher erläutert. Es zeigen:
- Figur 1: eine Seitenansicht auf eine erfindungsgemäße Vorrichtung zum Schneiden von Profilen;
- Figur 2: eine Schnittansicht entlang der Linie A-A der Figur 1, und
- Figur 3: eine Draufsicht auf die Schneidvorrichtung der Figur 1.

Eine Vorrichtung zum Schneiden von Profilen weist einen Rahmen 1 auf, der aus einem gegossenen Aluminiumgrundgehäuse bestehen kann. An dem Rahmen 1 ist eine Aufnahme 2 für Schneidbacken vorgesehen, wobei eine Schneidbacke fest mit dem Rahmen 1 verbunden ist und eine weitere Schneidbacke über einen Hebel 3 bewegbar ist. Zwischen den Schneidbacken ist ein im Wesentlichen C-förmiger Spalt 11 ausgebildet, sodass in einem entsprechend geformten Profil ein Kern einfügbar ist, um innen das Profil abzustützen.

Der Hebel 3 ist aus drei Teilen 30, 31 und 32 zusammengesetzt, die für den Transport ineinandergeschoben werden können. Denn für die Bearbeitung ist ein besonders langer Hebel 3 von Vorteil, während der Hebel 3 in voller Länge für den Transport nur hinderlich ist. Die Teile 30, 31 und 32 sind dabei rohrförmig ausgebildet und ineinander teleskopierbar.

Zur Verstärkung der Kraft betätigt der Hebel 3 einen Exzenter 4, der dann auf eine bewegbare Schneidbacke 7 wirkt. Durch den Exzenter 4 wird verglichen mit der Schwenkbewegung des Hebels 3 die Schneidbacke 7 nur geringfügig bewegt, allerdings können mit dieser Übersetzung hohe Kräfte übertragen werden.

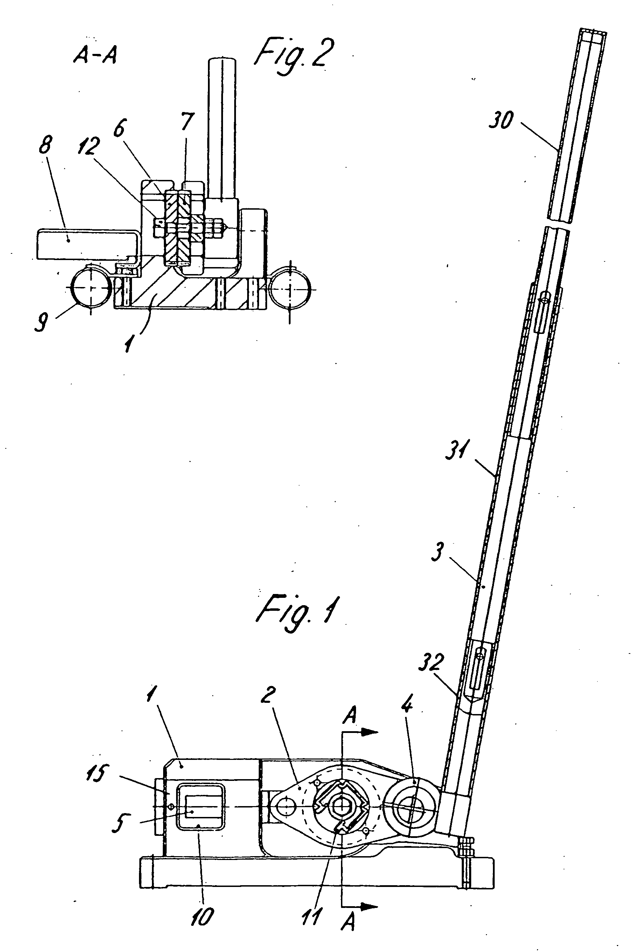

Wie in Figur 2 zu sehen ist, ist benachbart zu der beweglichen Schneidbacke 7 eine stationäre Schneidbacke 6 an dem Rahmen 1 festgelegt. Durch die Schneidbacken 6 und 7 ist eine Schraube 12 hindurchgeführt, die die beiden Schneidbacken 6 und 7 zusammenhält, damit während des Schneidvorganges dieselben nicht auseinandergedrückt werden.

An der Aufnahme 2 für die bewegbare Schneidbacke 7 ist ein Stempel 5 angelenkt, der in einer Gleitbuchse geführt ist. Der Stempel 5 ist bei Bewegung des Hebels 3 durch eine Matrize 15 durchführbar, wodurch mit dem Stempel 5 ein Langloch ausgestanzt wird. Hierfür ist eine Aufnahme 10 in Form einer quadratischen Öffnung vorgesehen, in die ein Profil eingeschoben werden kann, wobei die Aufnahme 10 das Profil in eine Richtung senkrecht zur Bewegungsrichtung des Stempels 5 führt.

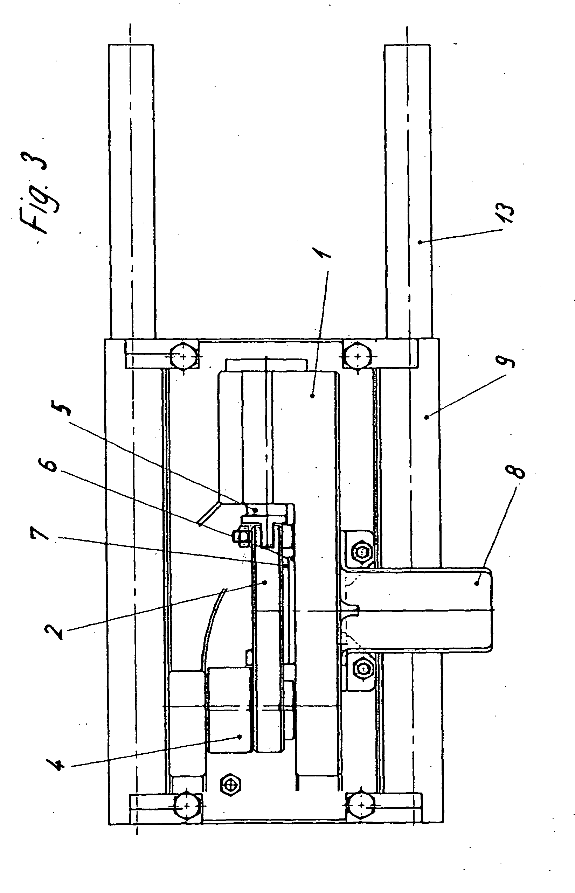

Nachdem mit dem Hebel 3 in der verlängerten Version erhebliche Kräfte über den Exzenter 4 übertragen werden können, sind an dem Rahmen 1 Aufnahmen 9 für Profile 13 zur Vergrößerung der bodenseitigen Auflagefläche vorgesehen. Wie in Figur 3 zu sehen ist, sind in die Aufnahmen 9 zwei Rohre 13 eingefügt, die über den Rahmen 1 hervorstehen, um über den Hebel 3 eingeleitete Kräfte aufnehmen zu können.

Ferner ist seitlich an dem Rahmen 1 noch eine Profilauflage 8 montiert, um das Einfädeln von Profilen in den Spalt 11 zwischen den Schneidbacken 6 und 7 zu erleichtem.

Mit der dargestellten Vorrichtung kann ein Profil in den Spalt 11 eingefügt werden, um auf die gewünschte Länge abgeschnitten zu werden. Für die weitere Montage wird dann das abgelängte Profil in die Aufnahme 10 eingesteckt, um an vorbestimmten Stellen über den Stempel 5 Langlöcher einzustanzen, damit das Profil gleich montiert werden kann. Mit ein- und derselben Vorrichtung lassen sich somit die insbesondere im Installationsbereich notwendigen Arbeitsgänge problemlos ausführen.

Die Erfindung ist nicht auf das dargestellte Ausführungsbeispiel beschränkt. Beispielsweise kann die Form des Spaltes 11 zwischen den Schneidbacken 6 und 7 je nach Profil auch variiert werden. Auch die Geometrie des Stempels 5 kann modifiziert werden, um statt einem Langloch ein kreisförmiges Loch, oder andere Geometrien auszustanzen. Ferner ist es möglich, noch eine Öffnung zum Ablängen von Gewindestiften in den Schneidbacken 6 und 7 vorzusehen, damit auch diese Funktion mit der Vorrichtung erfüllt werden kann.

## Patentansprüche

1. Vorrichtung zum Schneiden von Profilen, mit einem Rahmen (1) und zwei relativ zueinander bewegbaren Schneidbacken (6, 7), von denen mindestens eine bewegbar ist und zwischen denen ein Spalt (11) zum Einfügen eines Profils vorgesehen ist, und mit einem Stempel (5) der zum Stanzen eines Loches in das Profil durch eine Matrize (15) durchführbar ist, wobei die bewegbare Schneidbacke (7) und der Stempel (5) über einen manuell betätigbaren Hebel (3) und einen Exzenter (4) bewegbar sind, **dadurch gekennzeichnet, dass** die bewegbare Schneidbacke (7) in einer Aufnahme (2) aufgenommen ist, die mit dem Exzenter (4) in Verbindung steht, wobei der Stempel (5) an der Aufnahme (2) angelenkt und in einer am Rahmen (1) festgelegten Gleitbuchse geführt ist, und wobei an dem Rahmen (1) Aufnahmen (9) für Profile (13) zur Vergrößerung der bodenseitigen Auflagefläche vorgesehen sind.

2. Vorrichtung nach Anspruch 1,
**dadurch gekennzeichnet, dass** die Matrize (15) und eine Schneidbacke (6) an dem Rahmen (1) festgelegt sind.

3. Vorrichtung nach Anspruch 1 oder 2,
**dadurch gekennzeichnet, dass** der zwischen den Scheidbacken (6, 7) ausgebildete Spalt (11) im Wesentlichen C-förmig ausgebildet ist.

4. Vorrichtung nach einem der Ansprüche 1 bis 3,
**dadurch gekennzeichnet, dass** der Hebel (3) für den Transport der Vorrichtung zerlegbar oder einziehbar ist.

5. Vorrichtung nach einem der Ansprüche 1 bis 4,
**dadurch gekennzeichnet, dass** eine senkrecht zur Bewegungsrichtung des Stempels (5) angeordnete Profilaufnahme (10) vorgesehen ist, um ein Profil zwischen Stempel (5) und Matrize (15) zu positionieren.

6. Vorrichtung nach einem der Ansprüche 1 bis 5,
**dadurch gekennzeichnet, dass** seitlich an dem Rahmen (1) eine Profilauflage (8) montiert ist, um das Einfädeln von Profilen in den Spalt (11) zwischen den Schneidbacken (6, 7) zu erleichtern.

## Claims

1. A device for cutting profiles comprising a frame (1) and two cutter jaws (6, 7) which are movable relative to one another, at least one of said jaws being movable and a gap (11) for inserting a profile being provided between them, and comprising a male die (5) which can be passed through a female die (15) for punching a hole into the profile, wherein the movable cutter jaw (7) and the male die (5) can be moved by means of a manually operated lever (3) and a cam (4),
**characterized in that** the movable cutter jaw (7) is received in a seat (2) connected to the cam (4), wherein the male die (5) is hinged to the seat (2) and guided in a slide bushing fixed to the frame (1), and wherein seats (9) for profiles (13) for enlarging the bottom-side area of support are provided on the frame (1).

2. The device according to claim 1,
**characterized in that** the female die (15) and one cutter jaw (6) are fixed to the frame (1).

3. The device according to claim 1 or 2,
**characterized in that** the gap (11) formed between the cutter jaws (6, 7) is substantially C-shaped.

4. The device according to one of claims 1 to 3,
**characterized in that** the lever (3) is detachable or retractable for transporting the device.

5. The device according to one of claims 1 to 4,
**characterized in that** a profile seat (10) is provided in perpendicular arrangement to the moving direction of the male die (5) for positioning a profile between male die (5) and female die (15).

6. The device according to one of claims 1 to 5,
**characterized in that** a profile support (8) is mounted laterally on the frame (1) to facilitate the insertion of profiles into the gap (11) between the cutter jaws (6, 7).

## Revendications

1. Dispositif pour le découpage de profilés, avec un cadre (1) et deux mâchoires de coupe (6, 7) pouvant être déplacées l'une par rapport l'une à l'autre, dont au moins l'une est mobile, et entre lesquelles est prévue une fente (11) pour l'insertion d'un profilé, et avec un poinçon (5), qui peut être conduit à travers une matrice (15) pour estamper un trou dans le profilé, la mâchoire de coupe mobile (7) et le poinçon (5) pouvant être déplacés au moyen d'un levier (3) à main et d'un excentrique (4),
**caractérisé en ce que** la mâchoire de coupe mobile (7) et le poinçon (5) sont reçus dans un logement (2), qui est en relation avec l'excentrique (4), le poinçon (5) étant relié au logement (2) de manière articulée, et guidé dans une douille coulissante, fixée au cadre (1), et des logements (9) étant prévus sur le cadre (1), pour accueillir des profilés (13), afin d'agrandir la surface d'appui côté fond.

2. Dispositif selon la revendication 1, **caractérisé en ce que** la matrice (15) et une mâchoire de coupe (6) sont fixées au cadre (1).

3. Dispositif selon revendication 1 ou 2, **caractérisé en ce que** la fente (11), formée entre les mâchoires de coupe (6, 7), est conçue sensiblement en forme de C.

4. Dispositif selon l'une des revendications 1 à 3, **caractérisé en ce que** le levier (3) peut être démonté ou escamoté pour le transport du dispositif.

5. Dispositif selon l'une des revendications 1 à 4, **caractérisé en ce qu'**un réceptacle (10) de profilé, disposé perpendiculairement par rapport au mouvement de déplacement du poinçon (5), est prévu pour positionner un profilé entre le poinçon (5) et la matrice (15).

6. Dispositif selon l'une des revendications 1 à 5, **caractérisé en ce qu'**un support de profilé (8) est monté latéralement au cadre (1) pour faciliter l'introduction des profilés dans la fente (11), entre les mâchoires de coupe (6, 7).
